# EUROPEAN PATENT SPECIFICATION

(11) **EP 4 060 970 B1**
(45) Date of publication and mention of the grant of the patent: **07.05.2025**
(21) Application number: 22162200.4
(22) Date of filing: 15.03.2022
(51) Int. Cl.: H04M 3/51, H04M 3/22, H04M 3/40

(54) **SYSTEM AND METHOD FOR CONTENT FOCUSED CONVERSATION**
SYSTEM UND VERFAHREN FÜR INHALTSFOKUSSIERTE KONVERSATION
SYSTÈME ET MÉTHODE POUR UNE CONVERSATION CENTRÉE SUR LE CONTENU

(30) Priority: 15.03.2021 US 202117201270
(43) Date of publication of application: 21.09.2022
(73) Proprietor: Avaya Management L.P., Durham NC 27713 (US)
(72) Inventor: SHAH, Shamik, 411048 Pune (IN); MATULA, Valentine C, Granville, 43023 (US); PANSURIA, Amit, 411041 Pune (IN)
(74) Representative: Page White Farrer

(56) References cited:
- JP-A- 2013 046 088
- US-B1- 10 432 687

## Description

### FIELD OF THE DISCLOSURE

The invention relates generally to systems and methods for communications and particularly to detecting and reducing or removing communication content directed to irrelevant subject matter.

### BACKGROUND

Contact center agents are coached on several different parameters to deliver good performance, behavior, appearance, vocal quality, and demeanor to the customer, and thereby provide best in class user experiences. Real time analysis and feedback of agent's behavior helps agents track their own performance.

However, even if the agent abides by all the rules and standards, which may result in the agent delivering the best-in-class user experience, conversations with annoyed and difficult customers do occur. Even with ample training regarding handling difficult customers, negative customer experiences do affect the agents. The agents are often left to their own capabilities to overcome from difficult, harsh, or even abusive conversations, reset for the next call and deliver quality customer service to the next customer. If a series of difficult calls occur within the same day, the agent may become demotivated or otherwise result in errors or other poor performance during subsequent calls. This may be exacerbated when agents conduct conversations on multiple channels simultaneously, such as a number of voice and chat sessions.

US 10 432 687 discloses biometric masking includes testing video data and/or audio data from a video conference for biometric markers indicative of emotion or stress levels. JP 2013 046088 discloses controlling a telephone call content without leaving determination to an operator by monitoring the telephone call of a user thereby to uniformly perform converting processing by masking, etc. before transmitting emotional voice and a dangerous expression to an operator.

### SUMMARY

These and other needs are addressed by the various embodiments and configurations of the present invention. The present invention can provide a number of advantages depending on the particular configuration. These and other advantages will be apparent from the disclosure of the invention(s) contained herein.

There is provided a communication system according to claim 1. There is further provided a method according to claim 13.

In one arrangement, the content of a communication is emotionally "flattened" so as to present the content of what is said in a call, or typed in a text message, to the agent, but with some or all of the negative emotionally-charged content removed. The initiation or escalation from one level to another level of emotional filtering may be determine by a manual input, such as the agent or a supervisor monitoring the communication, or by an automated system, such as an artificial intelligence (AI), such as a neural network, to automatically detect the presence of actionable emotional content, the need to mitigate the emotional content, and/or the extent of the mitigation. While embodiments may be described with respect to audio content (e.g., speech, utterances, or otherwise vocalized expressions), in other embodiments, the communication may be visual (e.g., facial expressions, body language, eye movement, gestures, background and foreground images, etc.) or textual (e.g., words, phrases, symbols, etc.) and/or extended/enhanced text, such as to include images, emojis, graphics, etc.

Human communication is a complex and often nuanced form of communication. The insertion of tone or inflections can negate the literal content of what is spoken. For example, the phrase, "right, that will work," could be said positively or flatly to convey the meaning of, "I agree that will work." In contrast, an alteration of the speaker's tone or inflection may incorporate sarcasm into the speech and thereby convey the opposite meaning of, "That will not work and the suggestion of such a solution is ridiculous, uninformed, or indicates misunderstanding or incompetence." The ways in which one human may insert an insult or 'ad homonym' attack on another human is almost limitless. In one example, a customer is engaged with an agent in an audio communication. At some point during the conversation, the customer uses foul language or angerly shouts, "I don't like you." As a result, the systems and methods herein may tonally modify the speech, such as to volume-balance the speech so the volume is not elevated above the mean volume of the rest of the conversation; the pitch, pace, or inflection of the speech may be modified to remove the "anger" from the words spoken, the phrase may be redacted or removed and not presented to the agent, and/or a substitute expression inserted into the agent's audio, such as a "bleep" or a mere description, such as, "I am upset." In another embodiment, the content may be omitted from the communication and a description presented via other means, such as textually or graphically on a display utilized by the agent during the communication. For example, the customer's outburst during a voice call may be presented as silence with a text message presented on the agent's display stating, "Customer is upset."

In another arrangement, speech may be converted to text and then presented to the agent as speech from the generated text, such as to provide the agent with a level, or even monotone, version of the content provided. As a further option, the speech generated from the text may be in a more soothing or robotic voice or otherwise presented with an emotionally-neutral or even calm delivery to the agent. Additionally or alternatively, natural language processing (NPL) maybe utilized to extract a meaning from the text, whether raw text from a chat or email message, or generated message from speech, to select an alternative phrase that conveys a similar meaning relative to the purpose of the communication but with less emotional context.

An AI system may be seeded with default values for what is previously determined to be an unacceptable expression. This may be further limited to an agent's demographic, such as country or region of origin, religion, ethnicity, social-economic status, etc. to account for the different perceptions of language and other forms of human communication. For example, the use of slang or a particular expression may have no consequence to one person, or even be considered as friendly, but insulting, hurtful, or otherwise not acceptable for others. The AI may receive inputs from the agent that indicate their perception of a particular portion of a communication provided by a customer. The input may be manual, such as by turning a dial, whether physical or embodied as a graphical element on a display device, or otherwise providing a direct indication of the agent's perception of the communication or a portion of a communication.

Additionally or alternatively, a particular agent's interest, likes, dislikes, and express or implicit tolerance for certain behavior of other may be derived from social media posts, likes, dislikes, etc. An agent's past history with the same person, or similar personality may also be utilized, such as to determine past communication content that was, or was not, indicated as acceptable or tolerable.

While no agent may enjoy certain negative expressions directed to themselves in a communication, in another embodiment, a threshold level or type of negative expression is determined that is likely to impact the agent's performance in the current call, subsequent call, or over a period of subsequent calls.

In another embodiment, the communication is text base. Accordingly, systems and methods are provided to replace emotionally-charged words or other expressions with summary meaning having less emotion (e.g., "I am upset"), substitute characters (e.g., a string of asterisks or other characters), whitespace, etc.

In another embodiment, the AI system would also mask/blur the customer's face, body, or body portion to mask their physical appearance while speaking offensive speech that is audibly blocked or masked and/or obscure or block the customer's body such as to conceal obscene gestures, offensive messages on apparel or otherwise within view of the customer's camera, etc. In some embodiments, mere blocking (e.g., blur, white box/black box, etc.) may be provided. In other embodiments, a "deep fake" masking of the image may be provided to overly the offensive image with a neutral, or at least less emotionally charged, image.

While the content to be attenuated or redacted may be negatively emotionally-charged content, it another embodiment, the content may be attenuated or redacted if determined to violate a company's standards or rules of behavior. For example, in a conference call, an "off color" joke may be determined to be offensive or otherwise against company policy, even though the speaker may believe they are promoting humor, enjoyment, or other positive emotion. Similarly, a passing comment about negatively-charged event, such as a natural disaster, may be considered to be normal 'small talk,' or even friendly, but if the agent or agent's family was impacted by the natural disaster, the performance of the agent may be impacted by such an emotionally charged comment that may have no particular effect on another agent.

The embodiments herein may be directed to other two-party communications beyond those of a customer and agent, as well as to incorporate three or more people. Each person may have their own standard for what is negatively emotionally charged, such as offensive or considered as a personal attack, etc. Accordingly, the background, ethnicity, origin, etc., of each participant may be determined and content presented or attenuated/blocked varied on an individual basis. For example, two companies may be conducting a mediation or arbitration to resolve a dispute outside of the court system. The reason for the dispute may be emotionally charged with various participants "venting" and verbally attacking the individuals on the other side. By attenuating or redacting the attacks, the need for the party attacked to retaliate and further exacerbate the attacks, is diminished to promote a more factual conversation to resolve the issue. However, a mediator or arbitrator may be required to hear exactly what is said and be presented with the raw communication.

As a benefit of the embodiments described herein, a conversation may be maintained with more focus on the content of the conversation related to the purpose of the conversation and not on the emotional or distracting content that may be provided with the contents.

**In** one arrangement, a communications system is disclosed, comprising: a network interface to a network; and a processor comprising machine-readable instructions that when read by the processor cause the processor to perform: monitoring a communication between a first user device, utilized by a first user, and a second user device, utilized by a second user, utilizing the network; upon determining the communication comprises emotionally charged content from the first user device, modifying the communication to comprise the communication omitting the emotionally charged content and comprising an attenuated emotionally charged content and; and causing the modified communication to be presented to the second user device.

**In** another arrangement, a method is disclosed, comprising: monitoring a communication between a first user device, utilized by a first user, and a second user device, utilized by a second user, utilizing a network; upon determining the communication comprises emotionally charged content from the first user device, modifying the communication to comprise the communication omitting the emotionally charged content and comprising an attenuated emotionally charged content and; and causing the modified communication to be presented to the second user device.

In another arrangement, a system for communications is disclosed, comprising: means to monitor a communication between a first user device, utilized by a first user, and a second user device, utilized by a second user, utilizing a network; means to, upon determining the communication comprises emotionally charged content from the first user device, modify the communication to comprise the communication omitting the emotionally charged content and comprising an attenuated emotionally charged content and; and means to present the modified communication on the second user device.

A system on a chip (SoC) including any one or more of the above embodiments or aspects of the embodiments described herein.

One or more means for performing any one or more of the above embodiments or aspects of the embodiments described herein.

Any aspect in combination with any one or more other aspects.

Any one or more of the features disclosed herein.

Any one or more of the features as substantially disclosed herein.

Any one or more of the features as substantially disclosed herein in combination with any one or more other features as substantially disclosed herein.

Any one of the aspects/features/embodiments in combination with any one or more other aspects/features/embodiments.

Use of any one or more of the aspects or features as disclosed herein.

Any of the above embodiments or aspects, wherein the data storage comprises a non-transitory storage device comprise at least one of: an on-chip memory within the processor, a register of the processor, an on-board memory co-located on a processing board with the processor, a memory accessible to the processor via a bus, a magnetic media, an optical media, a solid-state media, an input-output buffer, a memory of an input-output component in communication with the processor, a network communication buffer, and a networked component in communication with the processor via a network interface.

It is to be appreciated that any feature described herein can be claimed in combination with any other feature(s) as described herein, regardless of whether the features come from the same described embodiment.

The phrases "at least one," "one or more," "or," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B, and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware , an embodiment that is entirely software (including firmware, resident software, microcode, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible, non-transitory medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electromagnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below. Also, while the disclosure is presented in terms of exemplary embodiments, it should be appreciated that an individual aspect of the disclosure can be separately claimed.

### BRIEF DESCRIPTION OF THE DRAWINGS

The present disclosure is described in conjunction with the appended figures:
Fig. 1 depicts a first system in accordance with embodiments of the present disclosure;
Fig. 2 depicts a data structure in accordance with embodiments of the present disclosure;
Fig. 3 depicts a first process in accordance with embodiments of the present disclosure;
Fig. 4 depicts a second process in accordance with embodiments of the present disclosure; and
Fig. 5 depicts a second system in accordance with embodiments of the present disclosure.

### DETAILED DESCRIPTION

The ensuing description provides embodiments only and is not intended to limit the scope, applicability, or configuration of the claims. Rather, the ensuing description will provide those skilled in the art with an enabling description for implementing the embodiments. It will be understood that various changes may be made in the function and arrangement of elements without departing from the spirit and scope of the appended claims.

Any reference in the description comprising a numeric reference number, without an alphabetic sub-reference identifier when a sub-reference identifier exists in the figures, when used in the plural, is a reference to any two or more elements with a like reference number. When such a reference is made in the singular form, but without identification of the sub-reference identifier, is a reference one of the like numbered elements, but without limitation as to the particular one of the elements. Any explicit usage herein to the contrary or providing further qualification or identification shall take precedence.

The exemplary systems and methods of this disclosure will also be described in relation to analysis software, modules, and associated analysis hardware. However, to avoid unnecessarily obscuring the present disclosure, the following description omits well-known structures, components, and devices, which may be omitted from or shown in a simplified form in the figures or otherwise summarized.

For purposes of explanation, numerous details are set forth in order to provide a thorough understanding of the present disclosure. It should be appreciated, however, that the present disclosure may be practiced in a variety of ways beyond the specific details set forth herein.

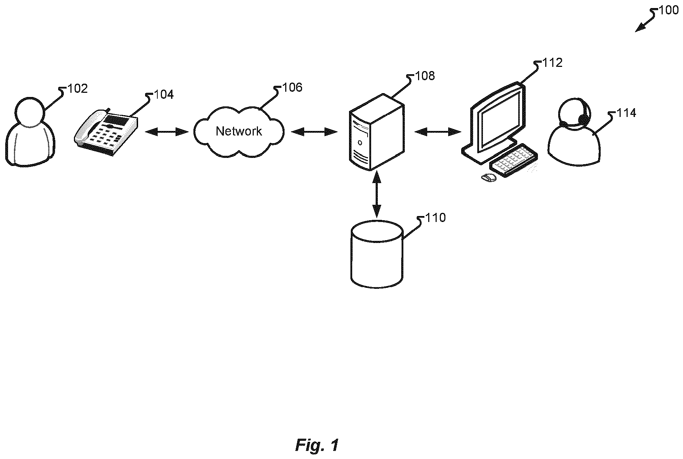

Fig. 1 depicts system 100 in accordance with embodiments of the present disclosure. In one embodiment, user 102 is engaged in a communication with agent 114 utilizing user device 104 and agent device 112, respectively, to communicate over network 106. The communication may be embodied as audio (e.g., speech), video, text, or a combination thereof.

Whether intentional or inadvertent, user 102 may use emotionally charged content when communicating with agent 114. Even with the best training, exposure to emotionally charged content, especially if repeated or for a prolonged period of time with the same or different users 102, will take a toll on agent 114. As a result, communications may be less efficient, errors may become more frequent, calls may be on hold for longer, resources taxed, and other network, as well as the personal, costs associated with being exposed to emotionally charged content. As a result, the content of a communication may need to be repeated, clarified, corrected, or repeated in its entirety to detect and correct such errors. As a result, network and computing resources are overutilized as communications are extended or repeated to correctly address the purpose of the communication.

As used herein, "emotionally charged content" is any content conveyed in a communication that is tangential to the purpose of the communication and is known or determined to be perceived negatively and personally by the recipient, such as agent 114. Emotionally charged content may include insults, personal attacks, profanity, etc., that may be perceived by a broad category of people as being perceived negatively. In other embodiments, the emotionally charged content may be more narrowly perceived as such, for example, user 102 may be engaging in small talk with agent 114 and mention a recent natural disaster or other tragic event. However, if agent 114, or a family member of agent 114, was affected by such an event, it may be perceived negatively by agent 114, even though user 102 may have had no such intention and merely wanted to engage in friendly banter before addressing the purpose of the communication.

In one embodiment, server 108 monitors the communication and determines if the content of the communication comprises emotionally charged content and, if so, attenuates or entirely removes the emotionally charged content. While certain embodiments herein describe a contact center operation, wherein a customer (e.g., user 102) communicates with an agent of the contact center (e.g., agent 114), such roles are provided as a means to distinguish one party from another and not as a limitation. Additionally, certain embodiments are described between two parties (e.g., user 102 and agent 114), however, electronic conferences comprising three or more people may be utilized wherein each participant of the conference may be embodied as a unique instance of agent 114 receiving the contents of the conference. For example, during an arbitration, the arbitrator (embodied as agent 114) may be presented with raw communications from one or more parties (e.g., embodiments of user device 104), whereas a different party (embodied as a different agent 114) may receive attenuated content.

As introduced above, what is considered emotionally charged content may include words, phrases, gestures, intonations, volume (i.e., audio waveform amplitude), images, etc. Server 108 accesses records maintained in data storage 110, to access indicia of emotionally charged content associated with all humans, a specific population segment of which agent 114 is a member, or an individual (e.g., one embodiment of agent 114). If user 102 provides emotionally charged content into the communication, server 108 attenuates, in whole or in part, the emotionally charged content. As a result, agent device 112 presents to agent 114 the content of the communication that is necessary or related to the purpose of the communication and omits, in whole or in part, the emotionally charged content.

Server 108 monitors the communication between user 102 and agent 114. The purpose of the communication may be to provide or obtain information to or from a business or other entity, of which agent 114 is an agent for such a business or entity, perform a transaction, and/or other transaction or information exchange therebetween. In one embodiment, the communication is an audio-based communication comprising speech between user 102 and agent 114. User 102 may insert emotionally charged content into the conversation, such as when user 102 has become angry or frustrated, and is yelling. While the volume level may be limited by the components utilized to facilitate the communication, normal human perception allows one to determine when another human is yelling from the intonation, cadence, pitch, and/or other vocalizations of the person yelling. The determination may be made by server 108 monitoring the communication and, optionally with benefit of data, rules, or other content maintained by data storage 110.

As a result, server 108 may attenuate the emotionally charged content utilizing one or more modifications to the remainder communication or to the communication comprising the emotionally charged content. In one embodiment, the volume of the speech is reduced, such as to cause loud content (e.g., yelling) to be presented by agent device 112 at substantially the same volume as normal speech or even below the mean volume level. In another embodiment, intonations and other sounds may be modified so as to provide the vocalizations comprising the emotionally charged content presented by agent device 112 is consistent with normal speech that is more normal and has less or no emotion indicated. In the foregoing embodiments, the content of the emotionally charged content is maintained in the communication presented to agent device 112 and, in turn, to agent 114. In other embodiments, the content of the emotionally charged content is attenuated, in whole, or in part. In one embodiment, user 102 speaks emotionally charged content, for example, the phrase, "I don't like you."

Server 108 may attenuate the content of the communication comprising the emotionally charged content by removing it entirely and presenting silence to agent 114; substituting a meaning of the emotionally charged content, "customer is upset;" substituting indicia of generic speech, "customer is discussing an irrelevant topic;" etc. Server 108 may apply additional processing of emotionally charged content. For example, on a first occurrence of emotionally charged content, volume leveling is applied, on a second occurrence, additional volume adjustment is applied to cause the emotionally charged content to be quieter which may be result in being below the level of normal speech, another occurrence may result in tonal modification (e.g., anger conveyed in the emotionally charged content sounds more 'flat' to more closely resemble normal speech), another modification may be to convert the speech into a new voice selected due to an ability to negate some of the perception of harsh language. Such a conversion may be done directly on the speech, such as by utilizing speech converting codecs. Additionally or alternatively, the speech may be converted as a result of performing a speech-to-text translation of the speech provided by user 102 and then presenting the text on agent device 112 to be read by agent 114 and/or convert the resulting text back to speech in a voice having less negative perception (e.g., robotic voice, soft spoken simulated human voice, etc.).

In another embodiment, the communication comprises video. Server 108, or at least one processor thereof, may utilize an algorithm and/or artificial intelligence, such as a neural network trained to identify emotionally charged content in a video image whether in general or specific to an entry in a data record of data storage 110 specific to agent 114. Accordingly, user device 104 may comprise a video camera (not shown) capturing an image of user 102. Server 108 determines the body position, gesture, facial expression, background/foreground, etc., comprises emotionally charged content. As a result, server 108 applies one or more attenuations to the video image alone or incrementally or in parallel.

In one embodiment, server 108 redacts the emotionally charged content entirely (e.g., box or other geometry) to cause agent device 112 to display the video image omitting the emotionally charged content. Additionally or alternatively, an overlay may be provided in place of the emotionally charged content. For example, one or more frames of the video image may be held and, upon determining the video portion of the communication comprises emotionally charged content, such as a transient gesture, playing the one or more frames in place of the frames that comprise the emotionally charged content, which may be the entire dimension of the frame or limited to a portion of the frames comprising the gesture. Additionally or alternatively, the entire frame(s) or portion of the frames comprising the emotionally charged content may be blurred, pixelated, replaced with a substitute image, etc. For example, user 102 may have a poster visible in the background of the video image that comprises emotionally charged content, generally or specifically to agent 114, and is then obscured, blocked, or otherwise omitted from being presented on agent device 112 for viewing by agent 114.

In another embodiment, the emotionally charged content comprises text, such as in a real-time text chat or email. Server 108 may obscure, remove, summarize, or otherwise cause the emotionally charged content to be omitted from presentation on agent device 112 for viewing by agent 114

Server 108 may not determine emotionally charged content perfectly. In order to refine the decision-making ability of server 108 to more accurately determine what is and/or what is not emotionally charged content, agent 114 may provide feedback, such as via input device associated with agent device 112. Feedback may be provided during a real-time communication (e.g., voice, video, real-time text chat) or post-communication (e.g., reviewing a recording of a voice and/or video call, upon receipt of an email). In-call feedback may be provided by an input to agent device 112, such as via turning a physical dial or graphical equivalent and/or other input device. As a result, server 108 may then analyze a prior portion of a communication (e.g., the last set of words or phrases spoken, any new or changed content in a video image, etc.) and subsequently identify such content as emotionally charged content, an increased severity of emotionally charged content, and/or content that was determined to be emotionally charged content for some agents but not for agent 114, now make applicable to agent 114.

Server 108 may record the communication, such as for storage in data storage 110 and/or other storage device. In one embodiment, server 108 records content, as received from user device 104 and/or as presented on agent device 112 for subsequent presentation to agent 114. In reviewing a past communication, server 108 may cause agent device 112 to present indicia of attenuated content. The indica may be purposefully vague (e.g., "At 17:31-17:40, blurred rude gesture", "At 3:43-3:58, customer was upset," etc.) or provide the raw content. Accordingly, agent 114 may indicate that server 108 determined emotionally charged content in error and none is present. As a result, provide indica to a neural network of the error and/or demote a rule utilized to make the determination. Additionally or alternatively, what is and is not emotionally charged content may be applied to a demographic group of which agent 114 is a member. Upon receiving an above-threshold indication from similar members of the same demographic group, server 108 may determine such an indication applies to all members of the demographic group.

It should be appreciated that any the order of attenuation, or applying two or more attenuations as single attenuation step, may be utilized without departing from the scope of the embodiments.

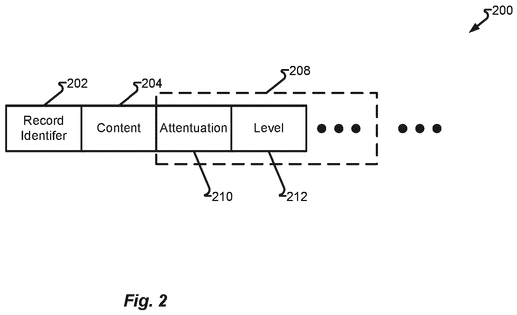

Fig. 2 depicts data structure 200 in accordance with embodiments of the present disclosure. In one embodiment, data structure 200 may be maintained in data storage 110 and/or other data storage accessible to server 108 to determine whether a specific content of a communication is or is not emotionally charged content and/or attenuation step(s) to take if such content is emotionally charged content.

Data structure 200 is variously embodied and may comprise record identifier 202, such as a database record when data structure 200 defines a series of records therein. Content 204 comprises indica of content determined to be emotionally charged content. Content 204 may be a particular word, phrase, intonation, gesture, etc., or a description thereof. Attenuation block 208 comprises one or more attenuation pairs, comprising attenuation 210 describing a particular action to attenuate the emotionally charged content and optionally level 212, describing a degree or level of action. For example, content 204 may comprise an offensive spoken phrase. Attenuation block 208 may comprise a first pair of attenuation 210 and level 212, such as attenuation 210 being "decrement volume" and level 212 being "to mean audio level." As a result, the offensive spoken phrase is presented to agent 114 but at a normal volume level. A subsequent occurrence may cause server 108 to access as a second pair of attenuation 210 and level 212, such as attenuation 210 being, "voiceover" and level 212 being "neutral voice," to cause a second occurrence of the offensive phrase to be presented in a neural voice. In a further subsequent occurrence may cause server 108 to access a third pair of attenuation 210 and level 212, such as attenuation 210 being, "Summarize: 'customer is upset‴, which may have level 212 being null or absolute, such as to present agent 114 with only "customer is upset," either audible or textually or graphically on agent device 112. In a further subsequent occurrence may cause server 108 to access a fourth pair of attenuation 210 and level 212, such as attenuation 210 being, "mute", which may have level 212 being null or absolute, such as to omit the offensive phrase.

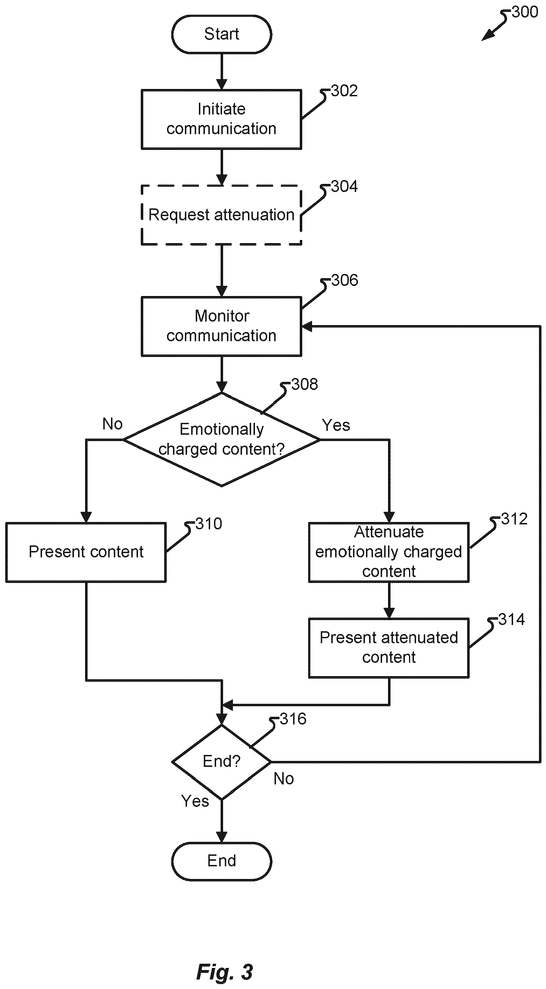

Fig. 3 depicts process 300 in accordance with embodiments of the present disclosure. In one embodiment, process 300 may be embodied as machine-readable instructions that, when read by a machine, such as at least one processor of server 108, cause the machine to perform the steps of process 300. Process 300 begins and a communication is initiated in step 302. The communication may be inbound (e.g., initiated by user 102 using user device 104 to agent device 112 and agent 114) or outbound (e.g., initiated by agent device 112, server 108, and/or another component to user device 104). Step 304 may initiate attenuation via an explicit input from agent 114 on agent device 112 to signal server 108 to initiate attenuation. Step 304 may be initiated automatically, such as for all communications, communications with a particular user 102, communications with a particular agent 114, etc.

Next step 306 monitors the communication, such as by server 108. If test 308 determines emotionally charged content is not present, processing continues to step 310 which presents the content to the recipient, such as agent 114. If test 308 determines emotionally charged content is present, processing continues to step 312 which attenuates the emotionally charged content and presents the attenuated content to the recipient, such as agent 114, in step 314. If test 316 determines the communication has ended, process 300 terminates or, if test 316 determines the communication has not ended processing continues back to step 306 to continue monitoring the communication.

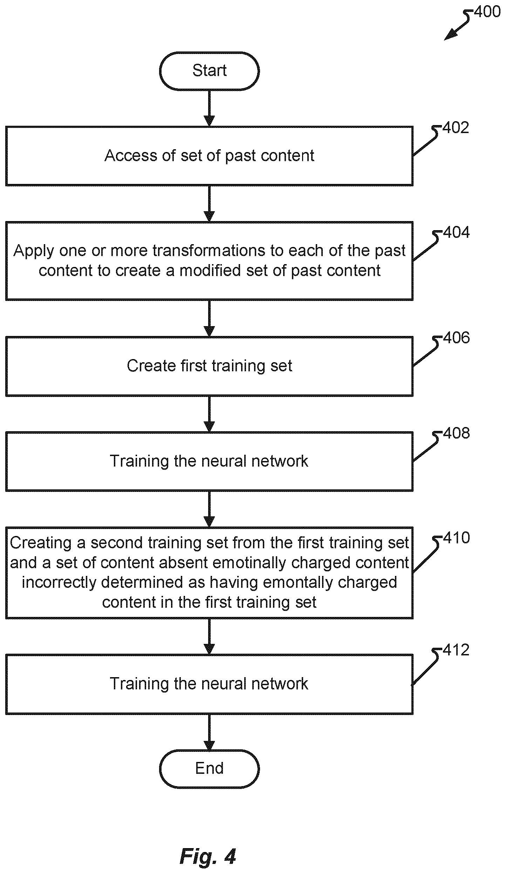

Fig. 4 depicts process 400 in accordance with embodiments of the present disclosure. In one embodiment, process 400 may be embodied as machine-readable instructions that, when read by a machine, such as at least one processor of server 108, cause the machine to perform the steps of process 400. In one embodiment, process 400 produces a trained neural network that may then be accessed, such as by a processor of server 108, to determine whether content within a communication, such as current communication between user 102 and agent 114, comprises emotionally charged content and, if so, attenuates the emotionally charged content in the communication as presented to agent device 112.

A neural network, as is known in the art and in one embodiment, self-configures layers of logical nodes having an input and an output. If an output is below a self-determined threshold level, the output is omitted (i.e., the inputs are within the inactive response portion of a scale and provide no output), if the self-determined threshold level is above the threshold, an output is provided (i.e., the inputs are within the active response portion of a scale and provide an output), the particular placement of the active and inactive delineation is provided as a training step or steps. Multiple inputs into a node produce a multi-dimensional plane (e.g., hyperplane) to delineate a combination of inputs that are active or inactive.

Process 400 begins and a set of pass content is accessed in step 402. The content (e.g., word, phrase, visual element, textual element, intonation, vocalization, etc.) being accessed as a portion of each of a set of past communications. Step 404 applies one or more transformation to each of the set of past content to create a modified set of past contents. The modification comprising one or more of altering the volume, substituting a synonymous expression, altering pitch, altering cadence, altering inflection, altering a demographic attribute of a provider of the at least one past content, and altering a demographic attribute of a recipient of the at least one past content to create a modified set of past data content.

Step 406 creates a first training set from the set of past contents and the modified set of past contents, and a set of contents absent emotionally charged content. Step 408 then trains the neural network in a first training state with the first training set. Step 410 then creates a second training set in a first state using the first training set for a second state of training comprising the first training set and the set of content absent emotionally charged content that are incorrectly identified as comprising emotionally charged content in the first training set. Step 412 trains the neural network in the second training set.

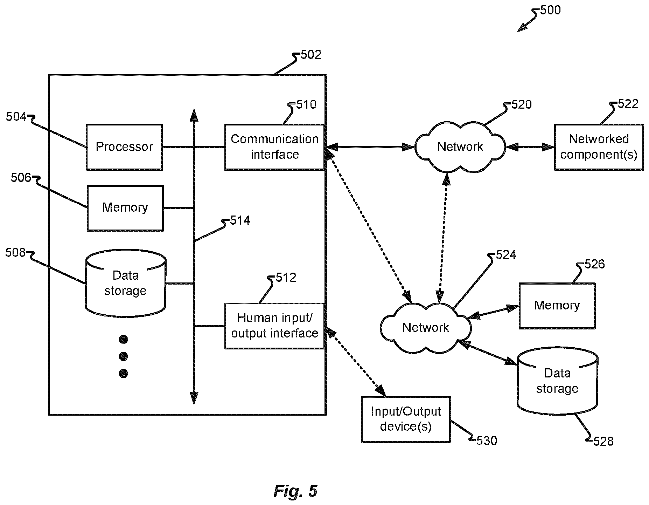

Fig. 5 depicts device 502 in system 500 in accordance with embodiments of the present disclosure. In one embodiment, server 108 may be embodied, in whole or in part, as device 502 comprising various components and connections to other components and/or systems. The components are variously embodied and may comprise processor 504. The term "processor," as used herein, refers exclusively to electronic hardware components comprising electrical circuitry with connections (e.g., pin-outs) to convey encoded electrical signals to and from the electrical circuitry. Processor 504 may be further embodied as a single electronic microprocessor or multiprocessor device (e.g., multicore) having electrical circuitry therein which may further comprise a control unit(s), input/output unit(s), arithmetic logic unit(s), register(s), primary memory, and/or other components that access information (e.g., data, instructions, etc.), such as received via bus 514, executes instructions, and outputs data, again such as via bus 514. In other embodiments, processor 504 may comprise a shared processing device that may be utilized by other processes and/or process owners, such as in a processing array within a system (e.g., blade, multi-processor board, etc.) or distributed processing system (e.g., "cloud", farm, etc.). It should be appreciated that processor 504 is a non-transitory computing device (e.g., electronic machine comprising circuitry and connections to communicate with other components and devices).

Processor 504 may operate a virtual processor, such as to process machine instructions not native to the processor (e.g., translate the VAX operating system and VAX machine instruction code set into Intel^{®} 9xx chipset code to allow VAX-specific applications to execute on a virtual VAX processor), however, as those of ordinary skill understand, such virtual processors are applications executed by hardware, more specifically, the underlying electrical circuitry and other hardware of the processor (e.g., processor 504). Processor 504 may be executed by virtual processors, such as when applications (i.e., Pod) are orchestrated by Kubernetes. Virtual processors allow an application to be presented with what appears to be a static and/or dedicated processor executing the instructions of the application, while underlying non-virtual processor(s) are executing the instructions and may be dynamic and/or split among a number of processors.

**In** addition to the components of processor 504, device 502 may utilize memory 506 and/or data storage 508 for the storage of accessible data, such as instructions, values, etc. Communication interface 510 facilitates communication with components, such as processor 504 via bus 514 with components not accessible via bus 514. Communication interface 510 may be embodied as a network port, card, cable, or other configured hardware device. Additionally or alternatively, human input/output interface 512 connects to one or more interface components to receive and/or present information (e.g., instructions, data, values, etc.) to and/or from a human and/or electronic device. Examples of input/output devices 530 that may be connected to input/output interface include, but are not limited to, keyboard, mouse, trackball, printers, displays, sensor, switch, relay, speaker, microphone, still and/or video camera, etc. In another embodiment, communication interface 510 may comprise, or be comprised by, human input/output interface 512. Communication interface 510 may be configured to communicate directly with a networked component or utilize one or more networks, such as network 520 and/or network 524.

Network 106 may be embodied, in whole or in part, as network 520. Network 520 may be a wired network (e.g., Ethernet), wireless (e.g., WiFi, Bluetooth, cellular, etc.) network, or combination thereof and enable device 502 to communicate with networked component(s) 522. In other embodiments, network 520 may be embodied, in whole or in part, as a telephony network (e.g., public switched telephone network (PSTN), private branch exchange (PBX), cellular telephony network, etc.)

Additionally or alternatively, one or more other networks may be utilized. For example, network 524 may represent a second network, which may facilitate communication with components utilized by device 502. For example, network 524 may be an internal network to a business entity or other organization, such as contact center, whereby components are trusted (or at least more so) that networked components 522, which may be connected to network 520 comprising a public network (e.g., Internet) that may not be as trusted.

Components attached to network 524 may include memory 526, data storage 528, input/output device(s) 530, and/or other components that may be accessible to processor 504. For example, memory 526 and/or data storage 528 may supplement or supplant memory 506 and/or data storage 508 entirely or for a particular task or purpose. For example, memory 526 and/or data storage 528 may be an external data repository (e.g., server farm, array, "cloud," etc.) and allow device 502, and/or other devices, to access data thereon. Similarly, input/output device(s) 530 may be accessed by processor 504 via human input/output interface 512 and/or via communication interface 510 either directly, via network 524, via network 520 alone (not shown), or via networks 524 and 520. Each of memory 506, data storage 508, memory 526, data storage 528 comprise a non-transitory data storage comprising a data storage device.

It should be appreciated that computer readable data may be sent, received, stored, processed, and presented by a variety of components. It should also be appreciated that components illustrated may control other components, whether illustrated herein or otherwise. For example, one input/output device 530 may be a router, switch, port, or other communication component such that a particular output of processor 504 enables (or disables) input/output device 530, which may be associated with network 520 and/or network 524, to allow (or disallow) communications between two or more nodes on network 520 and/or network 524. For example, a connection between one particular customer, using a particular user device 104, may be enabled (or disabled) with a particular networked component 522. One of ordinary skill in the art will appreciate that other communication equipment may be utilized, in addition or as an alternative, to those described herein without departing from the scope of the embodiments.

In the foregoing description, for the purposes of illustration, methods were described in a particular order. It should be appreciated that in alternate embodiments, the methods may be performed in a different order than that described without departing from the scope of the embodiments. It should also be appreciated that the methods described above may be performed as algorithms executed by hardware components (e.g., circuitry) purpose-built to carry out one or more algorithms or portions thereof described herein. In another embodiment, the hardware component may comprise a general-purpose microprocessor (e.g., CPU, GPU) that is first converted to a special-purpose microprocessor. The special-purpose microprocessor then having had loaded therein encoded signals causing the, now special-purpose, microprocessor to maintain machine-readable instructions to enable the microprocessor to read and execute the machine-readable set of instructions derived from the algorithms and/or other instructions described herein. The machine-readable instructions utilized to execute the algorithm(s), or portions thereof, are not unlimited but utilize a finite set of instructions known to the microprocessor. The machine-readable instructions may be encoded in the microprocessor as signals or values in signal-producing components and included, in one or more embodiments, voltages in memory circuits, configuration of switching circuits, and/or by selective use of particular logic gate circuits. Additionally or alternative, the machine-readable instructions may be accessible to the microprocessor and encoded in a media or device as magnetic fields, voltage values, charge values, reflective/non-reflective portions, and/or physical indicia.

In another embodiment, the microprocessor further comprises one or more of a single microprocessor, a multi-core processor, a plurality of microprocessors, a distributed processing system (e.g., array(s), blade(s), server farm(s), "cloud", multi-purpose processor array(s), cluster(s), etc.) and/or may be co-located with a microprocessor performing other processing operations. Any one or more microprocessor may be integrated into a single processing appliance (e.g., computer, server, blade, etc.) or located entirely or in part in a discrete component connected via a communications link (e.g., bus, network, backplane, etc. or a plurality thereof).

Examples of general-purpose microprocessors may comprise, a central processing unit (CPU) with data values encoded in an instruction register (or other circuitry maintaining instructions) or data values comprising memory locations, which in turn comprise values utilized as instructions. The memory locations may further comprise a memory location that is external to the CPU. Such CPU-external components may be embodied as one or more of a field-programmable gate array (FPGA), read-only memory (ROM), programmable read-only memory (PROM), erasable programmable read-only memory (EPROM), random access memory (RAM), bus-accessible storage, network-accessible storage, etc.

These machine-executable instructions may be stored on one or more machine-readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

In another embodiment, a microprocessor may be a system or collection of processing hardware components, such as a microprocessor on a client device and a microprocessor on a server, a collection of devices with their respective microprocessor, or a shared or remote processing service (e.g., "cloud" based microprocessor). A system of microprocessors may comprise task-specific allocation of processing tasks and/or shared or distributed processing tasks. In yet another embodiment, a microprocessor may execute software to provide the services to emulate a different microprocessor or microprocessors. As a result, first microprocessor, comprised of a first set of hardware components, may virtually provide the services of a second microprocessor whereby the hardware associated with the first microprocessor may operate using an instruction set associated with the second microprocessor.

While machine-executable instructions may be stored and executed locally to a particular machine (e.g., personal computer, mobile computing device, laptop, etc.), it should be appreciated that the storage of data and/or instructions and/or the execution of at least a portion of the instructions may be provided via connectivity to a remote data storage and/or processing device or collection of devices, commonly known as "the cloud," but may include a public, private, dedicated, shared and/or other service bureau, computing service, and/or "server farm."

Examples of the microprocessors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 microprocessor with 64-bit architecture, Apple^{®} M7 motion comicroprocessors, Samsung^{®} Exynos^{®} series, the Intel^{®} Core^{™} family of microprocessors, the Intel^{®} Xeon^{®} family of microprocessors, the Intel^{®} Atom^{™} family of microprocessors, the Intel Itanium^{®} family of microprocessors, Intel^{®} Core^{®} i5-4670K and i7-4770K 22nm Haswell, Intel^{®} Core^{®} i5-3570K 22nm Ivy Bridge, the AMD^{®} FX^{™} family of microprocessors, AMD^{®} FX-4300, FX-6300, and FX-8350 32nm Vishera, AMD^{®} Kaveri microprocessors, Texas Instruments^{®} Jacinto C6000^{™} automotive infotainment microprocessors, Texas Instruments^{®} OMAP^{™} automotive-grade mobile microprocessors, ARM^{®} Cortex^{™}-M microprocessors, ARM^{®} Cortex-A and ARM926EJ-S^{™} microprocessors, other industry-equivalent microprocessors, and may perform computational functions using any known or future-developed standard, instruction set, libraries, and/or architecture.

Any of the steps, functions, and operations discussed herein can be performed continuously and automatically.

The exemplary systems and methods of this invention have been described in relation to communications systems and components and methods for monitoring, enhancing, and embellishing communications and messages. However, to avoid unnecessarily obscuring the present invention, the preceding description omits a number of known structures and devices. This omission is not to be construed as a limitation of the scope of the claimed invention. Specific details are set forth to provide an understanding of the present invention. It should, however, be appreciated that the present invention may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components or portions thereof (e.g., microprocessors, memory/storage, interfaces, etc.) of the system can be combined into one or more devices, such as a server, servers, computer, computing device, terminal, "cloud" or other distributed processing, or collocated on a particular node of a distributed network, such as an analog and/or digital telecommunications network, a packet-switched network, or a circuit-switched network. In another embodiment, the components may be physical or logically distributed across a plurality of components (e.g., a microprocessor may comprise a first microprocessor on one component and a second microprocessor on another component, each performing a portion of a shared task and/or an allocated task). It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the invention.

A number of variations and modifications of the invention can be used. It would be possible to provide for some features of the invention without providing others.

In yet another embodiment, the systems and methods of this invention can be implemented in conjunction with a special purpose computer, a programmed microprocessor or microcontroller and peripheral integrated circuit element(s), an ASIC or other integrated circuit, a digital signal microprocessor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this invention. Exemplary hardware that can be used for the present invention includes computers, handheld devices, telephones (e.g., cellular, Internet enabled, digital, analog, hybrids, and others), and other hardware known in the art. Some of these devices include microprocessors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein as provided by one or more processing components.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this invention can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

Embodiments herein comprising software are executed, or stored for subsequent execution, by one or more microprocessors and are executed as executable code. The executable code being selected to execute instructions that comprise the particular embodiment. The instructions executed being a constrained set of instructions selected from the discrete set of native instructions understood by the microprocessor and, prior to execution, committed to microprocessor-accessible memory. In another embodiment, human-readable "source code" software, prior to execution by the one or more microprocessors, is first converted to system software to comprise a platform (e.g., computer, microprocessor, database, etc.) specific set of instructions selected from the platform's native instruction set.

Although the present invention describes components and functions implemented in the embodiments with reference to particular standards and protocols, the invention is not limited to such standards and protocols. Other similar standards and protocols not mentioned herein are in existence and are considered to be included in the present invention. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present invention.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, as defined by the appended claims.

## Claims

1. A communications system, comprising:
a network interface to a network; and
a processor comprising machine-readable instructions that when read by the processor cause the processor to perform:
monitoring a communication (306) between a first user device, utilized by a first user, and a second user device, utilized by a second user, utilizing the network;
accessing indicia of emotionally charged content in records maintained in a data storage to determine if the monitored communication comprises emotionally charged content from the first user device;
upon determining the communication comprises emotionally charged content from the first user device (308), modifying the communication to comprise the communication omitting the emotionally charged content and comprising an attenuated emotionally charged content (312) and wherein the processor determines the communication comprises emotionally charged content derived from a set of attributes of the second user; and
causing the modified communication to be presented (314) to the second user device.

2. The communication system of claim 1, wherein modifying the communication to comprise the attenuated emotionally charged content, comprises redacting the emotionally charged content.

3. The communication system of claim 1, wherein modifying the communication to comprise the attenuated emotionally charged content, comprises replacing the emotionally charged content.

4. The communication system of claim 1, wherein the set of attributes of the second user comprise an attribute of a demographic category of a population determined to comprise the second user.

5. The communication system of claim 1, wherein the set of attributes of the second user comprise an attribute of a prior content of a prior communication, and wherein the second user indicated the prior content is emotionally charged and wherein the prior content is similar to the emotionally charged content.

6. The communication system of claim 1, wherein modifying the communication comprises volume-leveling the emotionally charged content.

7. The communication system of claim 1, wherein modifying the communication comprises modifying the tone of speech.

8. The communication system of claim 1, wherein the communication comprises video and the emotionally charged content comprises an emotionally charged visual content, and wherein modifying the communication to comprise the attenuated emotionally charged content further comprises an attenuated emotionally charged visual content.

9. The communication system of claim 1, wherein the communication comprises text and the emotionally charged content comprises an emotionally charged textual content, and wherein modifying the communication to comprise the attenuated emotionally charged content further comprises an attenuated emotionally charged textual content.

10. The communication system of claim 1, wherein:
monitoring the communication between the first user device, utilized by the first user, and the second user device, utilized by the second user, utilizing the network, further comprises monitoring the communication further comprising a third user device utilized by a third user;
upon determining the communication comprises emotionally charged content from the third user device with respect to the first user, modifying the communication to comprise the communication omitting the emotionally charged content and comprising the attenuated emotionally charged content;
causing the modified communication to be presented to the first user device; and
omitting the modifying of the emotionally charged content presented to the second user device.

11. The communication system of claim 1, wherein the instructions further cause the processor to determine whether the communication comprises emotionally charged content, further comprise instructions to cause the processor to provide the communication to a neural network trained to determine emotionally charged content and receiving from the neural network the determination of whether the communication comprises emotionally charged content.

12. The communication system of claim 11, wherein the neural network is trained to determine whether the communication comprises emotionally charged content, comprising:
accessing a set of past communications each comprising at least one past content determined to comprise emotionally charged content;
applying one or more transformations to each of the at least one past content of the set of past communications including one or more of altering the volume, substituting a synonymous expression, altering pitch, altering cadence, altering inflection, altering a demographic attribute of a provider of the at least one past content, and altering a demographic attribute of a recipient of the at least one past content to create a modified set of past content;
creating a first training set comprising the set of past content, the modified set of past content, and a set of content absent emotionally charged content;
training the neural network in a first state using the first training set;
creating a second training set for a second state of training comprising the first training set and the set of content absent emotionally charged content that are incorrectly identified as comprising emotionally charged content in the first training set; and
training the neural network in the second state using the second training set.

13. A method, comprising:
monitoring a communication (306) between a first user device, utilized by a first user, and a second user device, utilized by a second user, utilizing a network;
accessing indicia of emotionally charged content in records maintained in a data storage to determine if the monitored communication comprises emotionally charged content from the first user device;
upon determining the communication comprises emotionally charged content from the first user device (308), modifying the communication to comprise the communication omitting the emotionally charged content and comprising an attenuated emotionally charged content (312) and wherein determining the communication comprises emotionally charged content derived from a set of attributes of the second user; and
causing the modified communication to be presented to the second user device (314).

14. The method of claim 13, wherein modifying the communication to comprise the attenuated emotionally charged content, comprises replacing the emotionally charged content.

## Patentansprüche

1. Ein Kommunikationssystem, umfassend:
eine Netzwerkschnittstelle zu einem Netzwerk; und
einen Prozessor, der maschinenlesbare Anweisungen umfasst, die, wenn sie vom Prozessor gelesen werden, den Prozessor dazu veranlassen:
Überwachen einer Kommunikation (306) zwischen einem ersten Benutzergerät, das von einem ersten Benutzer verwendet wird, und einem zweiten Benutzergerät, das von einem zweiten Benutzer verwendet wird, unter Verwendung des Netzwerks;
Zugreifen auf Indizien emotional aufgeladener Inhalte in Aufzeichnungen, die in einem Datenspeicher geführt werden, um festzustellen, ob die überwachte Kommunikation emotional aufgeladene Inhalte vom ersten Benutzergerät umfasst;
bei Feststellung, dass die Kommunikation emotional aufgeladene Inhalte vom ersten Benutzergerät (308) umfasst, Modifizieren der Kommunikation, um die Kommunikation ohne die emotional aufgeladenen Inhalte und mit abgeschwächten emotional aufgeladenen Inhalten (312) zu umfassen, wobei der Prozessor feststellt, dass die Kommunikation emotional aufgeladene Inhalte umfasst, die aus einer Reihe von Attributen des zweiten Benutzers abgeleitet sind; und
Veranlassen, dass die modifizierte Kommunikation (314) dem zweiten Benutzergerät präsentiert wird.

2. Das Kommunikationssystem nach Anspruch 1, wobei das Modifizieren der Kommunikation, um die abgeschwächten emotional aufgeladenen Inhalte zu umfassen, das Redigieren der emotional aufgeladenen Inhalte umfasst.

3. Das Kommunikationssystem nach Anspruch 1, wobei das Modifizieren der Kommunikation, um die abgeschwächten emotional aufgeladenen Inhalte zu umfassen, das Ersetzen der emotional aufgeladenen Inhalte umfasst.

4. Das Kommunikationssystem nach Anspruch 1, wobei die Reihe von Attributen des zweiten Benutzers ein Attribut einer demografischen Kategorie einer Bevölkerung umfasst, die den zweiten Benutzer umfasst.

5. Das Kommunikationssystem nach Anspruch 1, wobei die Reihe von Attributen des zweiten Benutzers ein Attribut eines vorherigen Inhalts einer vorherigen Kommunikation umfasst, und wobei der zweite Benutzer angab, dass der vorherige Inhalt emotional aufgeladen ist und wobei der vorherige Inhalt den emotional aufgeladenen Inhalten ähnlich ist.

6. Das Kommunikationssystem nach Anspruch 1, wobei das Modifizieren der Kommunikation das Angleichen der Lautstärke der emotional aufgeladenen Inhalte umfasst.

7. Das Kommunikationssystem nach Anspruch 1, wobei das Modifizieren der Kommunikation das Modifizieren des Sprachtons umfasst.

8. Das Kommunikationssystem nach Anspruch 1, wobei die Kommunikation Video umfasst und die emotional aufgeladenen Inhalte emotional aufgeladene visuelle Inhalte umfassen, und wobei das Modifizieren der Kommunikation, um die abgeschwächten emotional aufgeladenen Inhalte zu umfassen, weiter abgeschwächte emotional aufgeladene visuelle Inhalte umfasst.

9. Das Kommunikationssystem nach Anspruch 1, wobei die Kommunikation Text umfasst und die emotional aufgeladenen Inhalte emotional aufgeladene textuelle Inhalte umfassen, und wobei das Modifizieren der Kommunikation, um die abgeschwächten emotional aufgeladenen Inhalte zu umfassen, weiter abgeschwächte emotional aufgeladene textuelle Inhalte umfasst.

10. Das Kommunikationssystem nach Anspruch 1, wobei:
Überwachen der Kommunikation zwischen dem ersten Benutzergerät, das vom ersten Benutzer verwendet wird, und dem zweiten Benutzergerät, das vom zweiten Benutzer verwendet wird, unter Verwendung des Netzwerks weiter das Überwachen der Kommunikation weiter ein drittes Benutzergerät umfasst, das von einem dritten Benutzer verwendet wird;
bei Feststellung, dass die Kommunikation emotional aufgeladene Inhalte vom dritten Benutzergerät in Bezug auf den ersten Benutzer umfasst, Modifizieren der Kommunikation, um die Kommunikation ohne die emotional aufgeladenen Inhalte und mit den abgeschwächten emotional aufgeladenen Inhalten zu umfassen;
Veranlassen, dass die modifizierte Kommunikation dem ersten Benutzergerät präsentiert wird; und
Aulassen des Modifizierens der emotional aufgeladenen Inhalte, die dem zweiten Benutzergerät präsentiert werden.

11. Das Kommunikationssystem nach Anspruch 1, wobei die Anweisungen den Prozessor weiter dazu veranlassen, festzustellen, ob die Kommunikation emotional aufgeladene Inhalte umfasst, weiter Anweisungen umfassen, um den Prozessor dazu zu veranlassen, die Kommunikation einem neuronalen Netzwerk bereitzustellen, das darauf trainiert ist, emotional aufgeladene Inhalte zu bestimmen, und vom neuronalen Netzwerk die Feststellung zu erhalten, ob die Kommunikation emotional aufgeladene Inhalte umfasst.

12. Das Kommunikationssystem nach Anspruch 11, wobei das neuronale Netzwerk darauf trainiert ist, festzustellen, ob die Kommunikation emotional aufgeladene Inhalte umfasst, umfassend:
Zugreifen auf eine Reihe vergangener Kommunikationen, die jeweils mindestens einen vergangenen Inhalt umfassen, der als emotional aufgeladen bestimmt wurde;
Anwenden einer oder mehrerer Transformationen auf jeden der mindestens einen vergangenen Inhalte der Reihe vergangener Kommunikationen, einschließlich einer oder mehrerer der folgenden: Ändern der Lautstärke, Ersetzen eines synonymen Ausdrucks, Ändern der Tonhöhe, Ändern des Tempos, Ändern der Betonung, Ändern eines demografischen Attributs eines Anbieters des mindestens einen vergangenen Inhalts und Ändern eines demografischen Attributs eines Empfängers des mindestens einen vergangenen Inhalts, um eine modifizierte Reihe vergangener Inhalte zu erstellen;
Erstellen eines ersten Trainingssatzes, der die Reihe vergangener Inhalte, die modifizierte Reihe vergangener Inhalte und eine Reihe von Inhalten ohne emotional aufgeladene Inhalte umfasst; Trainieren des neuronalen Netzwerks in einem ersten Zustand unter Verwendung des ersten Trainingssatzes;
Erstellen eines zweiten Trainingssatzes für einen zweiten Trainingszustand, der den ersten Trainingssatz und die Reihe von Inhalten ohne emotional aufgeladene Inhalte umfasst, die im ersten Trainingssatz fälschlicherweise als emotional aufgeladen identifiziert wurden; und
Trainieren des neuronalen Netzwerks im zweiten Zustand unter Verwendung des zweiten Trainingssatzes.

13. Ein Verfahren, umfassend:
Überwachen einer Kommunikation (306) zwischen einem ersten Benutzergerät, das von einem ersten Benutzer verwendet wird, und einem zweiten Benutzergerät, das von einem zweiten Benutzer verwendet wird, unter Verwendung eines Netzwerks;
Zugreifen auf Indizien emotional aufgeladener Inhalte in Aufzeichnungen, die in einem Datenspeicher geführt werden, um festzustellen, ob die überwachte Kommunikation emotional aufgeladene Inhalte vom ersten Benutzergerät umfasst;
bei Feststellung, dass die Kommunikation emotional aufgeladene Inhalte vom ersten Benutzergerät (308) umfasst, Modifizieren der Kommunikation, um die Kommunikation ohne die emotional aufgeladenen Inhalte und mit abgeschwächten emotional aufgeladenen Inhalten (312) zu umfassen, wobei festgestellt wird, dass die Kommunikation emotional aufgeladene Inhalte umfasst, die aus einer Reihe von Attributen des zweiten Benutzers abgeleitet sind; und
Veranlassen, dass die modifizierte Kommunikation dem zweiten Benutzergerät (314) präsentiert wird.

14. Das Verfahren nach Anspruch 13, wobei das Modifizieren der Kommunikation, um die abgeschwächten emotional aufgeladenen Inhalte zu umfassen, das Ersetzen der emotional aufgeladenen Inhalte umfasst.

## Revendications

1. Système de communication, comprenant :
une interface réseau d'un réseau ; et
un processeur comprenant des instructions lisibles par machine qui, une fois lues par le processeur, amènent le processeur à :
surveiller une communication (306) entre un premier dispositif d'utilisateur qui est utilisé par un premier utilisateur et un deuxième dispositif d'utilisateur qui est utilisé par un deuxième utilisateur, en utilisant le réseau ;
accéder à des indices de contenu chargé émotionnellement dans des enregistrements maintenus dans un stockage de données, afin de déterminer si la communication surveillée comprend du contenu chargé émotionnellement provenant du premier dispositif d'utilisateur ;
après avoir déterminé que la communication comprend du contenu chargé émotionnellement provenant du premier dispositif d'utilisateur (308), modifier la communication pour que la communication omette le contenu chargé émotionnellement et comprenne un contenu chargé émotionnellement qui est atténué (312), et dans lequel le processeur détermine que la communication comprend un contenu chargé émotionnellement qui est dérivé d'un ensemble d'attributs du deuxième utilisateur ; et
provoquer la présentation de la communication modifiée (314) au deuxième dispositif d'utilisateur.

2. Système de communication selon la revendication 1, dans lequel la modification de la communication pour qu'elle comprenne le contenu chargé émotionnellement qui est atténué, consiste à caviarder le contenu chargé émotionnellement.

3. Système de communication selon la revendication 1, dans lequel la modification de la communication pour qu'elle comprenne le contenu chargé émotionnellement qui est atténué, consiste à remplacer le contenu chargé émotionnellement.

4. Système de communication selon la revendication 1, dans lequel l'ensemble d'attributs du deuxième utilisateur comprend un attribut d'une catégorie démographique d'une population étant déterminée comme comprenant le deuxième utilisateur.

5. Système de communication selon la revendication 1, dans lequel l'ensemble d'attributs du deuxième utilisateur comprend un attribut d'un contenu antérieur d'une communication antérieure, dans lequel le deuxième utilisateur a indiqué que le contenu antérieur est chargé émotionnellement, et dans lequel le contenu antérieur est similaire au contenu chargé émotionnellement.

6. Système de communication selon la revendication 1, dans lequel la modification de la communication consiste à niveler en volume le contenu chargé émotionnellement.

7. Système de communication selon la revendication 1, dans lequel la modification de la communication consiste à modifier le ton de la parole.

8. Système de communication selon la revendication 1, dans lequel la communication comprend de la vidéo et le contenu chargé émotionnellement comprend un contenu chargé émotionnellement qui est visuel, et dans lequel la modification de la communication pour qu'elle comprenne le contenu chargé émotionnellement qui est atténué consiste en outre à comprendre un contenu chargé émotionnellement qui est visuel et atténué.

9. Système de communication selon la revendication 1, dans lequel la communication comprend du texte et le contenu chargé émotionnellement comprend un contenu chargé émotionnellement qui est textuel, et dans lequel la modification de la communication pour qu'elle comprenne le contenu chargé émotionnellement qui est atténué consiste en outre à comprendre un contenu chargé émotionnellement qui est textuel et atténué.

10. Système de communication selon la revendication 1, dans lequel :
la surveillance de la communication entre le premier dispositif d'utilisateur qui est utilisé par le premier utilisateur et le deuxième dispositif d'utilisateur qui est utilisé par le deuxième utilisateur, en utilisant le réseau, consiste en outre à :
surveiller la communication avec en outre un troisième dispositif d'utilisateur utilisé par un troisième utilisateur ;
après avoir déterminé que la communication comprend du contenu chargé émotionnellement provenant du troisième dispositif d'utilisateur par rapport au premier utilisateur, modifier la communication pour que la communication omette le contenu chargé émotionnellement et comprenne le contenu chargé émotionnellement qui est atténué ;
provoquer la présentation de la communication modifiée au premier dispositif d'utilisateur ; et
omettre la modification du contenu chargé émotionnellement qui est présenté au deuxième dispositif d'utilisateur.

11. Système de communication selon la revendication 1, dans lequel les instructions amènent en outre le processeur à déterminer si la communication comprend ou non du contenu chargé émotionnellement, comprennent en outre des instructions pour amener le processeur à fournir la communication à un réseau neuronal qui est entraîné pour déterminer du contenu chargé émotionnellement et à recevoir, du réseau neuronal, la détermination de savoir si la communication comprend ou non du contenu chargé émotionnellement.

12. Système de communication selon la revendication 11, dans lequel le réseau neuronal est entraîné pour déterminer si la communication comprend ou non du contenu chargé émotionnellement, comprenant des étapes consistant à :
accéder à un ensemble de communications passées comprenant chacune au moins un contenu passé étant déterminé comme comprenant du contenu chargé émotionnellement ;
appliquer une ou plusieurs transformations à chacun dudit au moins un contenu passé de l'ensemble de communications passées, qui consiste en l'une ou plusieurs de ces transformations parmi la modification du volume, la substitution d'une expression synonyme, la modification de la hauteur, la modification de la cadence, la modification de l'inflexion, la modification d'un attribut démographique d'un fournisseur dudit au moins un contenu passé et la modification d'un attribut démographique d'un destinataire dudit au moins un contenu passé afin de créer un ensemble modifié de contenus passés ;
créer un premier ensemble d'entraînements qui comprend l'ensemble de contenus passés, l'ensemble modifié de contenus passés et un ensemble de contenus dépourvus de contenus chargés émotionnellement ;
entraîner le réseau neuronal lors d'un premier état, en utilisant le premier ensemble d'entraînements ;
créer un deuxième ensemble d'entraînements pendant un deuxième état d'entraînement, qui comprend le premier ensemble d'entraînements et l'ensemble de ces contenus dépourvus de contenus chargés émotionnellement qui sont incorrectement identifiés comme comprenant du contenu chargé émotionnellement dans le premier ensemble d'entraînements ; et
entraîner le réseau neuronal lors du deuxième état, en utilisant le deuxième ensemble d'entraînements.

13. Procédé, consistant à :
surveiller une communication (306) entre un premier dispositif d'utilisateur qui est utilisé par un premier utilisateur et un deuxième dispositif d'utilisateur qui est utilisé par un deuxième utilisateur, en utilisant un réseau ;
accéder à des indices de contenu chargé émotionnellement dans des enregistrements maintenus dans un stockage de données, afin de déterminer si la communication surveillée comprend du contenu chargé émotionnellement provenant du premier dispositif d'utilisateur ;
après avoir déterminé que la communication comprend du contenu chargé émotionnellement provenant du premier dispositif d'utilisateur (308), modifier la communication pour que la communication omette le contenu chargé émotionnellement et comprenne un contenu chargé émotionnellement qui est atténué (312), et déterminer que la communication comprend du contenu chargé émotionnellement qui est dérivé d'un ensemble d'attributs du deuxième utilisateur ; et
provoquer la présentation de la communication modifiée (314) au deuxième dispositif d'utilisateur.

14. Procédé selon la revendication 13, dans lequel la modification de la communication pour qu'elle comprenne le contenu chargé émotionnellement qui est atténué, consiste à remplacer le contenu chargé émotionnellement.
